# EUROPEAN PATENT APPLICATION

(11) **EP 2 578 866 A1**
(43) Date of publication of application: **10.04.2013**
(21) Application number: 11789667.0
(22) Date of filing: 25.05.2011
(51) Int. Cl.: F02M 33/00, F01N 3/28, F01N 3/36, F02D 29/02, F02M 25/08

(54) **PURGING DEVICE FOR DURING THE IDLE STOP OF AN INTERNAL COMBUSTION ENGINE**

(30) Priority: 04.06.2010 JP 2010128407
(71) Applicant: Hitachi Automotive Systems, Ltd., Hitachinaka-shi Ibaraki 312-8503 (JP)
(72) Inventor: FUKUI Shunji, Hitachinaka-shi Ibaraki 312-8503 (JP); ASANO Seiji, Hitachinaka-shi Ibaraki 312-8503 (JP)
(74) Representative: MERH-IP Matias Erny Reichl Hoffmann
(86) International application number: PCT/JP2011/061944
(87) International publication number: WO 2011/152258

(57) **Abstract**

Disclosed is an engine control unit intended to prevent fuel vapors from a fuel tank from being released to the atmosphere and causing degradation of gas emission performance. In order to fulfill the object, a control unit according to an aspect of this invention includes means for discharging the fuel from a purging device constructed to adsorb the fuel vapors that rise from the fuel tank, and discharge the adsorbed fuel vapors into an air intake pipe, to an upstream side of a catalyst provided in an exhaust pipe, and when the control unit stops the engine that is running idle, the unit drives the discharge means to accelerate purification of the fuel vapors by sending the vapors to the catalyst under an active state immediately after the engine stop.

## Description

### Technical Field

The present invention relates primarily to a fuel discharge control method designed to efficiently discharge a fuel vapor gas in a vehicle equipped with an idling stop mechanism for an internal combustion engine.

### Background Art

In vehicles equipped with an internal combustion engine, fuel vapors from a fuel tank are adsorbed inside a canister and after release of the adsorbed fuel vapors from the canister, the vapors are guided into an air intake pipe according to the traveling state of the vehicle and then burnt with injected gasoline. If the vehicle has an idling-engine stopping mechanism, however, since the engine is stopped for a period of time corresponding to idling, the fuel vapors cannot be treated during the duration of the engine stop and continue to accumulate inside the canister. In hybrid vehicles that obtain driving force by operating an engine and a motor in coordination, a similar event also arises in a case such as stopping the engine and actuating only the motor to travel.
Patent Document 1: JP-2007-23779-A

### Summary of the Invention

### Problems to be Solved by the Invention

In such a conventional technique as described in Patent Document 1, fuel vapors rising from a fuel tank continue to accumulate inside a canister during the duration of an internal combustion engine stop, and the amount of accumulation continues to increase until the engine has been restarted and purging conditions held. Since there is a limit to the canister capacity, if the capacity is exceeded, the fuel vapors will be released to the atmosphere as they are. An object of the present invention is to prevent this undesirable event from occurring.

### Means for Solving the Problem

A control unit for a vehicle engine equipped with a purging device to adsorb, into an adsorption tank, fuel vapors that have occurred in a fuel tank, and discharge the fuel vapors according to internal combustion engine conditions, wherein the engine further includes fuel discharge means that forcibly discharges the fuel vapors to an upstream side of a catalyst provided in an exhaust pipe, and the control unit controls the fuel discharge means after an internal combustion engine is stopped but while the catalyst is active so that the fuel vapors may be discharged.

### Effects of the Invention

In accordance with the present invention, the fuel vapors are appropriately discharged even after the engine stop. The invention therefore reduces a canister capacity required of the purging device, while at the same time, preventing outflow of the fuel vapors into the atmosphere.

The present specification includes the content of the specification and/or drawings for the Japanese Patent Application, No. 2010-128407, from which the present application claims priority.

### Brief Description of the Drawings

Fig. 1 is a diagram showing an example of a control block of a fuel control unit to which the present invention is applied.
Fig. 2 is a diagram showing an example of a control block of a fuel vapor discharge device to which the present invention is applied.
Fig. 3 is a diagram showing an exemplary configuration of an engine which the fuel control unit according to the present invention is to control.
Fig. 4 is a diagram showing another exemplary configuration of an engine which the fuel control unit according to the present invention is to control.
Fig. 5 is a diagram showing yet another exemplary configuration of an engine which the fuel control unit according to the present invention is to control.
Fig. 6 is a diagram showing an exemplary internal configuration of a fuel control unit according to the present invention.
Fig. 7 shows examples of charts which represent changes in various variables during unburnt-gas emission control in the present invention.
Fig. 8 shows an example of a detailed diagram which represents effectiveness of a block 203 of the present invention, shown in Fig. 2.
Fig. 8a shows another example of a detailed diagram which represents effectiveness of the block 203 of the present invention, shown in Fig. 2.
Fig. 9 shows an example of a detailed diagram which represents effectiveness of blocks 207 and 208 of the present invention, shown in Fig. 2.
Fig. 10 is an example of a detailed flowchart showing a fuel calculation step and related steps included in the control block diagram of Fig. 1 relating to the present invention.
Fig. 11 is an example of a detailed flowchart relating to the control block diagram of Fig. 2 in the present invention.
Fig. 12 is an example of a detailed flowchart relating to the block 203 of Fig. 2 in the present invention.
Fig. 12a is another example of a detailed flowchart relating to the block 203 of Fig. 2 in the present invention.
Fig. 13 is an example of a detailed flowchart relating to the blocks 207 and 208 of Fig. 2 in the present invention.

### Description of Reference Numbers

- 102: Basic fuel quantity calculation means
- 109: Fuel vapor discharge execution determining means
- 119: Fuel vapor discharge means
- 202: In-catalyst occluded oxygen estimating section
- 203: Catalyst temperature estimating section
- 205: Idling-engine stop discriminating section
- 206: Driving permission determining section for fuel vapor discharge section
- 207: Control quantity calculating section for fuel vapor discharge section
- 208: Control section for fuel vapor discharge section
- 305: Air intake pipe pressure sensor
- 306: Fuel injector
- 310: Oxygen concentration sensor
- 311: Three-way catalyst
- 314: Engine control unit
- 315: Catalyst temperature sensor
- 316: Catalytically treated exhaust gas oxygen concentration sensor
- 317: Canister
- 318: Purging valve
- 319: Fuel vapor discharge pump
- 320, 421: Discharge pipes
- 419: Canister/Leak detector/checker
- 420: Drain valve
- 520: Electrically driven supercharger
- 802: Estimated engine-running catalyst temperature table
- 803: Catalyst temperature variations table
- 804: Spontaneous catalyst temperature reductions table
- 8a01: Spontaneous catalyst heat release quantity table
- 8a02: Catalyst reaction heat quantity table
- 8a04: Estimated catalyst temperature table
- 901: Purging valve angle position table
- 902: Flow rate correction data table
- 903: Pump control quantity table
- 905: Control quantity correction data table

### Best Mode for Carrying Out the Invention

Hereunder, embodiments of an engine control unit according to the present invention will be described in accordance with the accompanying drawings.

### First Embodiment

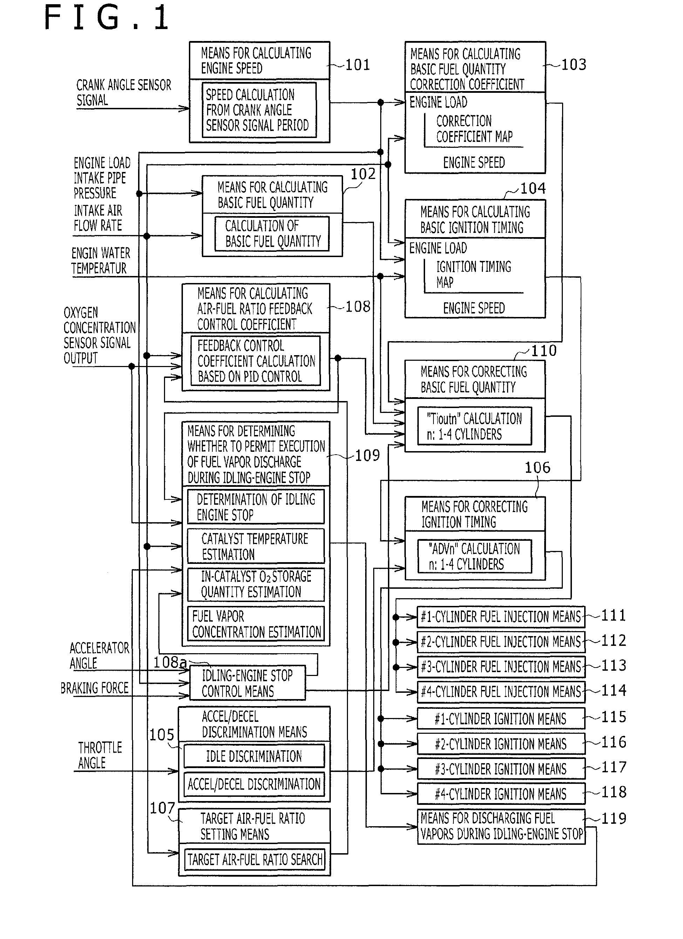

Fig. 1 is a diagram showing an example of a control block of an engine control unit to which the present invention is applied, the control unit being equipped with unburnt-gas emission means.

Block 101 operates as means for calculating a rotating speed of an engine. This block calculates the engine speed per unit time by conducting a computing process after counting the number of electric input signals, primarily per unit time of a pulse signal change, that are transmitted from a crank angle sensor previously set to a predetermined crank angle position of the engine.

Block 102 calculates the basic quantity of fuel that is required of the engine, from a load of the engine in addition to the engine speed that block 101 has computed. The engine load is represented as either a value obtained by converting an output of an air intake pipe pressure sensor mounted in/on an air intake pipe into an internal pressure of the intake pipe through a predetermined process, or a flow rate of engine intake air that is measured by a thermal-type air flowmeter or the like.

Block 103 calculates, from the engine load in addition to the engine speed computed by block 101, correction coefficients for the basic quantity of fuel that block 102 has calculated, the coefficients each corresponding to a specific running region of the engine.

Block 104 calculates optimal basic ignition timing for each of the engine running regions, from the engine speed and the engine load. The calculation is by map searching.

Block 105 discriminates a driver-intended engine state by detecting an angle position of a throttle valve mounted across the intake pipe in order to control the flow rate of the air taken into the engine. This block conducts the discrimination by determining whether the driver-intended state is an idle state or an accelerating/decelerating state.

Block 106, in accordance with the engine state that block 105 has discriminated, corrects the optimal basic ignition timing that block 104 has calculated by the map search.

Block 107 determines, by map searching or the like, optimal target air-fuel ratios for each running region of the engine, from the engine speed and the engine load.

Block 108 calculates an air-fuel ratio feedback coefficient by conducting fuel quantity feedback control according to a particular output of an oxygen concentration sensor mounted in/on an exhaust pipe. The air-fuel ratio that block 107 has determined for one of the engine running regions is thus obtained by the feedback control.

Block 108a executes idling-engine stop control based on an accelerator pedal angle position, braking force, and other information including the engine speed that block 101 calculated.

Block 109 determines whether to drive means that discharges the fuel stored within a purging device which purges the fuel vapors from a fuel tank before releasing the vapors into the air intake pipe. The determination takes place when a stopped state of the idling engine is discriminated from the execution state of the idling-engine stop control in block 108a. Whether the fuel vapor discharge means is to be permitted to execute the discharge is determined by a temperature of a catalyst or the amount of oxygen occluded in the catalyst, or both of the two variables. An estimated concentration in the purging device is used to estimate the volume of fuel vapors.

Block 110 calculates the basic quantity of fuel, calculated by block 102, by conducting corrections with an engine coolant temperature and a wall flow correction coefficient as well as with the basic fuel quantity correction coefficient and the air-fuel ratio feedback coefficient.

Blocks 111 to 114 constitute fuel injection means that supplies the quantity of fuel that has been calculated by block 110, to the engine. Blocks 115 to 118 constitute means that ignites an air-fuel mixture which has flown into a cylinder, the ignition being executed according to the engine-demanded ignition timing that has been obtained by the correction in block 106.

Block 119, when requested to drive the fuel vapor discharge means, actually drives this discharge means in accordance with the determination results computed in block 109.

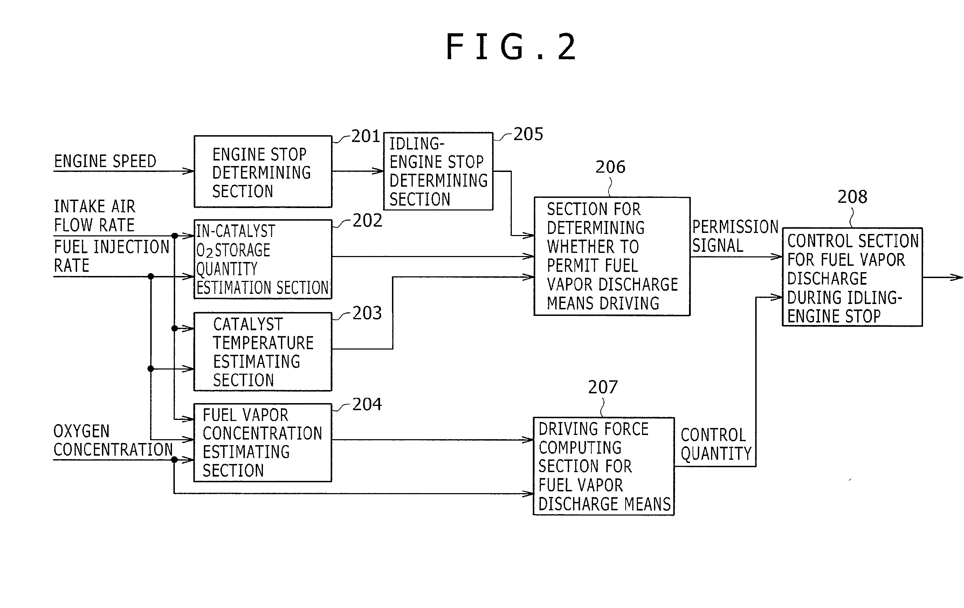

Fig. 2 is a schematic diagram that shows unburnt-gas emission control to which the present invention is applied.

Block 201 determines by the engine speed whether the engine has changed from a running state to a stopped state.

Block 202 estimates the amount of oxygen occluded in the catalyst, from the amounts of air intake and fuel injection during internal combustion engine operation.

Block 203 estimates the catalyst temperature from the amounts of air intake and fuel injection during internal combustion engine operation. Otherwise, catalyst-mounted temperature sensor measurement results may be used for the estimation.

Block 204 estimates the concentration of fuel vapors in the purging device from the amounts of air intake and fuel injection during internal combustion engine operation, as well as from temperature sensor measurement results.

Block 205 uses the determination results in block 201 to determine whether the idling engine is stopped.

Block 206 determines whether the fuel vapor discharge means is to be permitted to work, the determination being based on at least one of the following: the determination results in block 205, the amount of catalyst-occluded oxygen estimated in block 202, and the catalyst temperature estimated or measured in block 203.

Block 207 computes the driving force of the fuel vapor discharge means from both of the fuel vapor concentration in the purging device, estimated by block 204, and a value measured by the oxygen concentration sensor.

Block 208 drives the fuel vapor discharge means if the driving of this discharge means is permitted by the determination in block 206, The driving force obeys the value calculated by block 207.

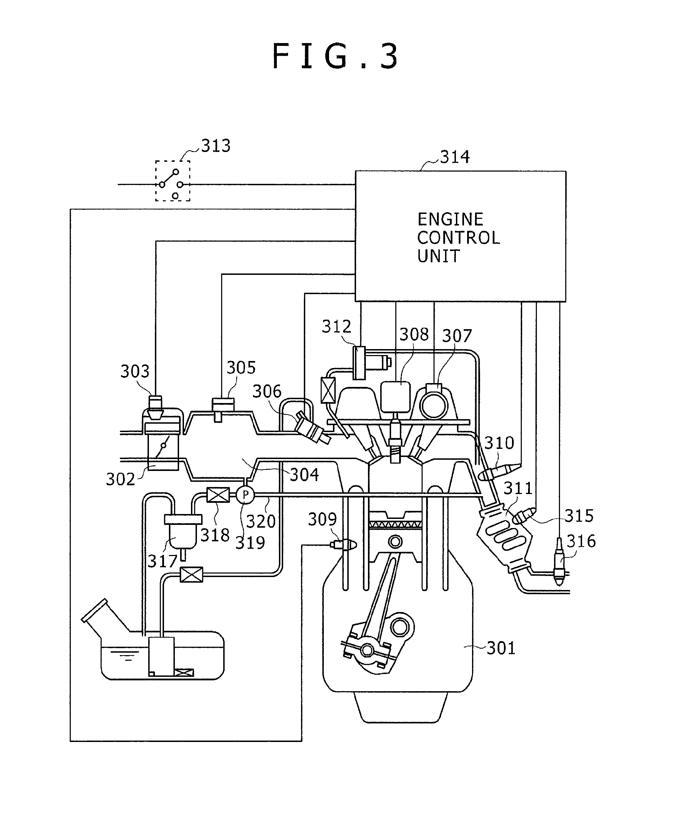

Fig. 3 show an exemplary configuration of an engine and periphery in the engine control unit according to the present invention, the engine control unit being equipped with the fuel vapor discharge means.

The engine 301 includes the following elements: a throttle valve 302 that controls the amount of air taken into the engine; an idling-engine speed control valve 303 that controls the speed of the engine at idle by controlling an area of a flow passageway circumventing the throttle valve and connected to an air intake pipe 304; an air intake pipe pressure sensor 305 that detects the internal pressure of the intake pipe 304; a fuel injector 306 that supplies the quantity of fuel that the engine demands; a crank angle sensor 307 set to a predetermined crank angle position of the engine; an ignition module 308 that supplies ignition energy to a sparking plug for ignition of the supplied air-fuel mixture in the cylinder, in accordance with an ignition signal from the engine control unit 314; a coolant temperature sensor 309 positioned in a cylinder block of the engine, for detecting a coolant temperature of the engine; an oxygen concentration sensor 310 positioned in an exhaust pipe of the engine, for detecting an oxygen concentration in an exhaust gas; a three-way catalyst 311 that cleans/purifies the exhaust gas released from the engine; exhaust gas recirculation means 312 provided in a pipe communicating the intake pipe with an upstream portion of the three-way catalyst 311 in the exhaust pipe, the exhaust gas recirculation means 312 allowing air in the intake pipe to recirculate between the intake pipe and the exhaust pipe; an ignition key switch 313 that is a main switch for starting and stopping the engine; the engine control unit 314 that controls various auxiliary/accessory devices and instruments for the engine; a catalyst temperature sensor 315 that detects the catalyst temperature; an oxygen concentration sensor 316 that detects the concentration of oxygen in the exhaust gas existing after being treated by the catalyst; a canister 317 that adsorbs fuel vapors coming in from a fuel tank; a purging valve 318 that controls the quantity of canister-adsorbed fuel to be purged before being sent to the intake pipe; a pump 319 that suctions air as well as fuel from the intake pipe and the purging valve; and a discharge pipe 320 that communicates with the pump and the exhaust pipe. The intake pipe pressure sensor 305 is integrated with an intake air temperature sensor that measures a temperature of the intake air. It goes without saying that the discharge pipe 320 has a discharge port constructed for a purge gas to be diffused for a uniform concentration in the exhaust pipe.

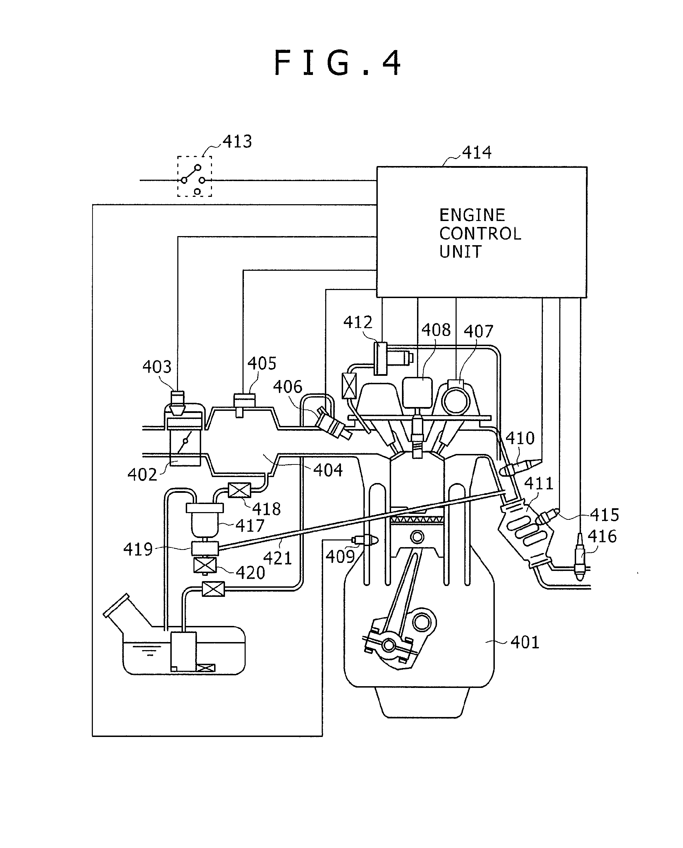

Fig. 4 is a diagram showing another exemplary configuration of an engine and periphery in the engine control unit according to the present invention, the engine control unit being equipped with the fuel vapor discharge means.

A canister 417 includes a checker 419 that checks for leaks in the canister, and a drain valve 420 on a drain pipe vented from the checker to the atmosphere, the canister 417 also including a discharge pipe 421 that is a passageway originating from the checker and communicating with an upstream portion of a catalyst provided on an exhaust pipe. The checker is provided with a negative-pressure pump in advance. The negative-pressure pump draws fuel vapors through the discharge tube 421. During this pumping of the fuel vapors, driving force of the negative-pressure pump and an area in an opening of the drain valve 420 are controlled. The fuel vapors are thus discharged with air, from the canister 417 into the exhaust pipe. It goes without saying that the discharge pipe 421 has a discharge port constructed for a purge gas to be diffused for a uniform concentration in the exhaust pipe.

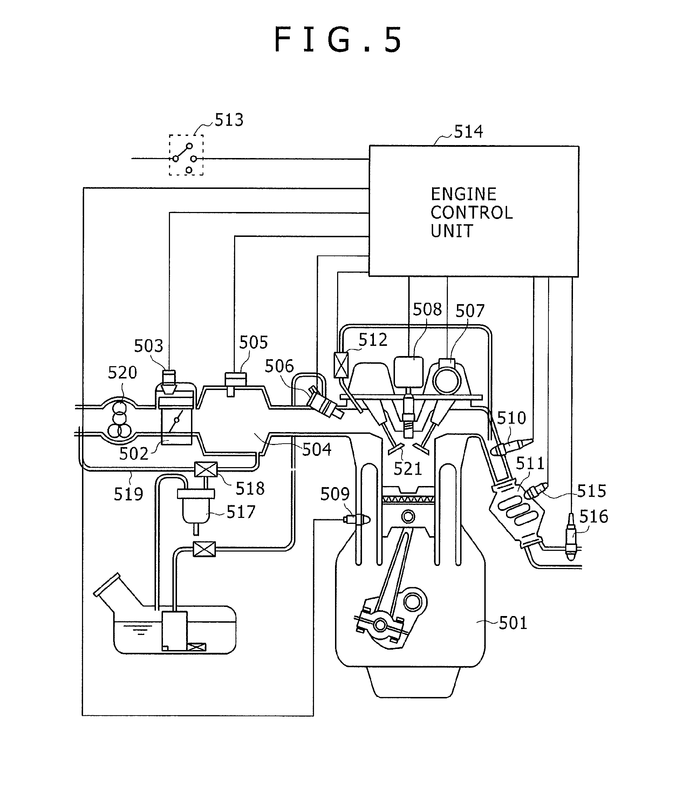

Fig. 5 is a diagram showing yet another exemplary configuration of an engine and periphery in the engine control unit according to the present invention, the engine control unit being equipped with the fuel vapor discharge means.

The engine 501 includes an electrically driven supercharger 520 that compresses intake air and supplies the compressed air to an air intake line, and a discharge pipe 519 that discharges a purge gas from a canister 517 to an upstream portion of the supercharger. The engine also includes a switching valve 518 that selects whether the purge gas is to be discharged into an air intake pipe or through the discharge pipe to the upstream portion of the supercharger. Before the fuel vapors are discharged, the switching valve 518 switches the discharge route guiding the purge gas to the discharge tube 519, and then the electrically driven supercharger 520 is actuated to pass the purge gas through a cylinder and discharge the fuel vapors, along with air, from the intake pipe into an exhaust pipe. During this process, an air intake/exhaust valve 521 is deactivated in its lowered state for a fixed period of time.

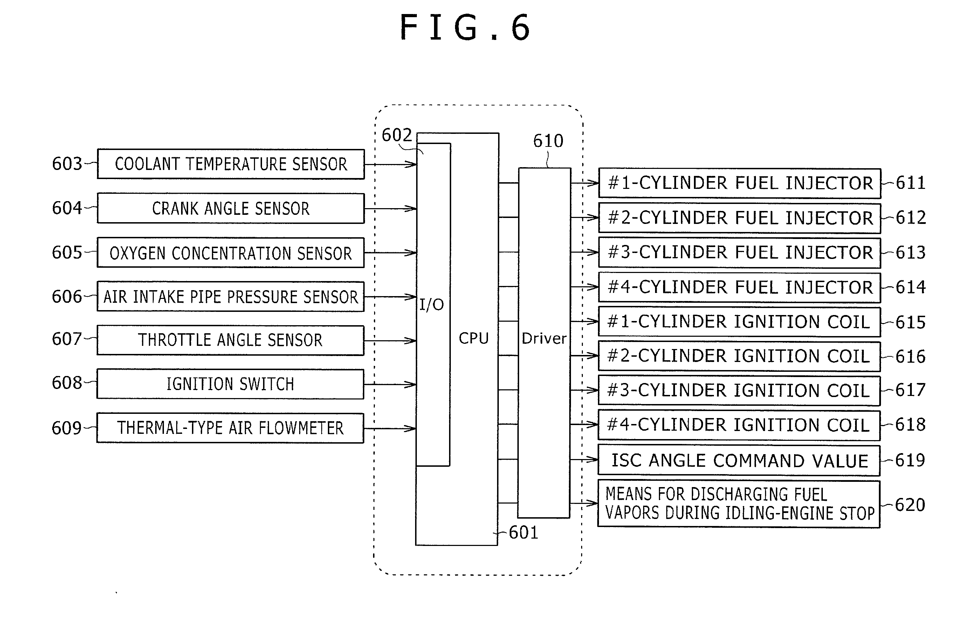

Fig. 6 shows an exemplary internal configuration of the engine control unit according to the present invention, the engine control unit being equipped with the fuel vapor discharge means.

Inside a CPU 601 is provided an I/O section 602 that converts engine-mounted sensor electrical signals into signals for digital arithmetic processing, and digital arithmetic control signals into actual driving signals for actuators. A signal from a coolant temperature sensor 603, a signal from a crank angle sensor 604, a signal from an oxygen concentration sensor 605, a signal from an air intake pipe pressure sensor 606, a signal from a throttle angle sensor 607, a signal from an ignition switch 608, and a signal from a thermal-type air flowmeter 609 are input to the I/O section 602. Output signals from the CPU 601 are sent to fuel injectors 611 to 614, ignition coils 615 to 618, and a fuel vapor discharge device 620, via a driver 610. The CPU 601 also outputs a signal to an ISC (Idle Speed Control) valve angle command value 619 addressed to an ISC valve or an electronically controlled throttle valve.

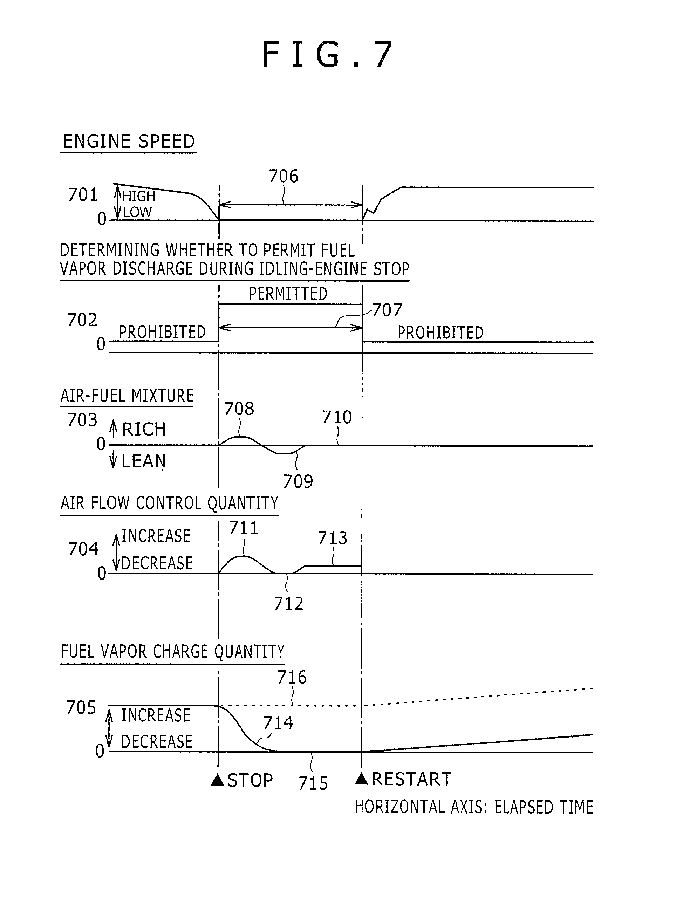

Fig. 7 shows examples of charts which represent how variables change when the engine control unit according to the present invention is executing control, the engine control unit being equipped with the fuel vapor discharge means.

Chart 701 represents changes in engine speed, chart 702 represents changes in starting and stopping signal states of the fuel vapor discharge means, chart 703 represents changes in the oxygen concentration of the exhaust gas, and chart 704 represents changes in a control quantity of the fuel vapor discharge means. Interval 706 is an idling-engine stop duration from the time when the engine at idle comes to a temporary stop, until the engine is next restarted. Chart 705 represents changes in the quantity of canister-occluded fuel vapor gas discharged using the technique of the present invention. Interval 707 is a time span over which the fuel vapor discharge means is driven. During an oxygen-rich engine running interval of time denoted as 708, the driving force of the fuel vapor discharge means is increased in much the same timing as airflow control interval denoted as 711, whereas during a fuel-vapor-lean engine running interval of time denoted by as 709, the driving force is reduced in much the same timing as airflow control interval denoted as 712. Thus, control takes place so that the purge gas discharged will work to maintain an appropriate air-fuel ratio. At this time, as denoted by 714, the quantity of fuel vapors in the canister is reduced according to the particular amount of control. Region 713 is where practically no fuel vapor exists in the canister, in which case, the fuel vapor discharge means continues to retain the driving force 713 needed to discharge the quantity of fuel equivalent to that of evaporation from the fuel tank. Whereas the quantity of canister-occluded fuel vapor gas discharged during idling-engine stop duration 706 by use of a conventional engine control technique remains substantially constant as denoted by 716, the quantity of canister-occluded fuel vapor gas discharged during the same idling-engine stop duration by use of the engine control technique of the present invention is reduced very significantly as denoted by 715.

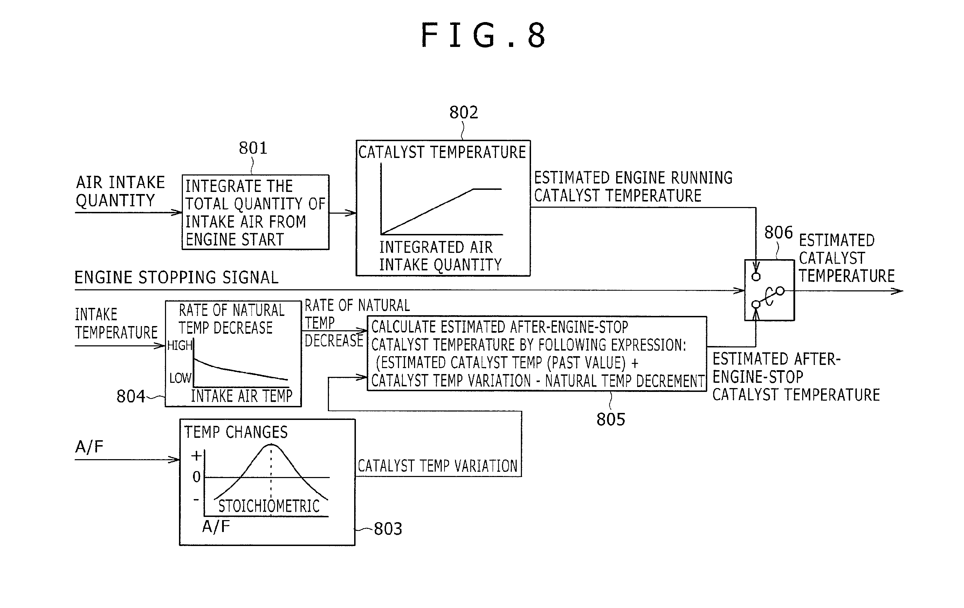

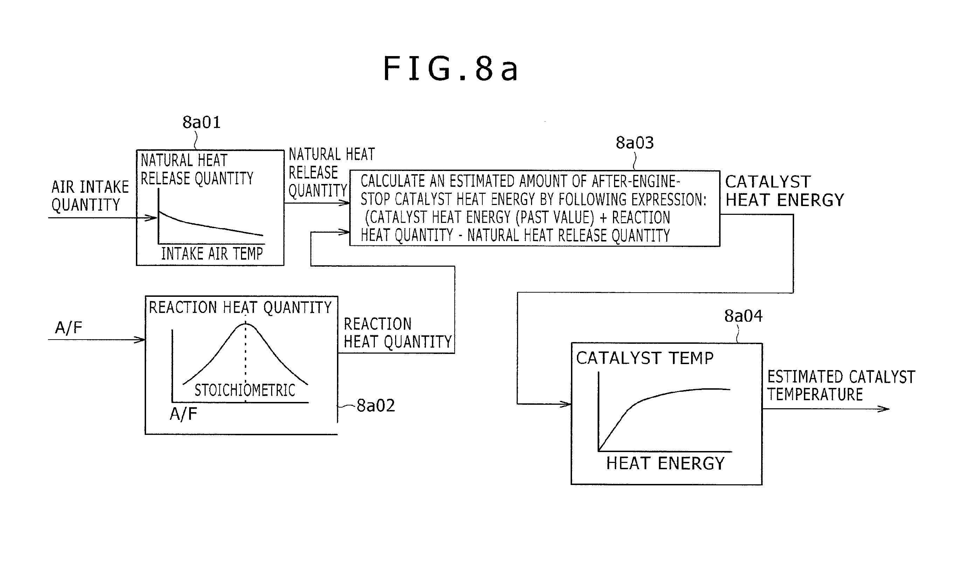

Fig. 8 is an example of a detailed diagram which represents effectiveness of the block 203 of the present invention, shown in Fig. 2.

Block 801 calculates a cumulative amount of air which has been taken in from the engine start, and block 802 estimates the engine-running (i.e., engine-on) catalyst temperature from that calculated value. Block 803 calculates a variation in a change rate (increase/decrease rate) of the catalyst temperature per unit time for a particular air-fuel ratio. Block 804 calculates a rate of natural decrease in the catalyst temperature per unit time, the rate of natural temperature decrease representing how the catalyst temperature spontaneously decreases according to the value of the temperature detected by the air intake temperature sensor. Block 805, after adding an estimated past catalyst temperature and the catalyst temperature variation, subtracts the natural temperature decrease rate from a sum of the former two values, thereby calculating a temperature that the catalyst is estimated to reach when the engine is stopped (i.e., off). Block 806 outputs either the estimated engine-on catalyst temperature or the estimated engine-off catalyst temperature, depending on whether the engine is running or stopped.

Fig. 8a is another example of a detailed diagram which represents effectiveness of the block 203 of the present invention, shown in Fig. 2.

Block 8a01 calculates a natural heat release quantity of the catalyst per unit time from the intake air temperature by conducting a table search. Block 8a02 calculates the quantity of reaction heat of the catalyst per unit time according to the particular air-fuel ratio. Block 8a03, after adding a past catalyst heat energy quantity value and the reaction heat quantity of the catalyst, subtracts the natural heat release quantity of the catalyst from a sum of the former two values, thereby calculating the amount of heat energy of the catalyst. Block 8a04 calculates the estimated catalyst temperature from the amount of heat energy of the catalyst by conducting a table search.

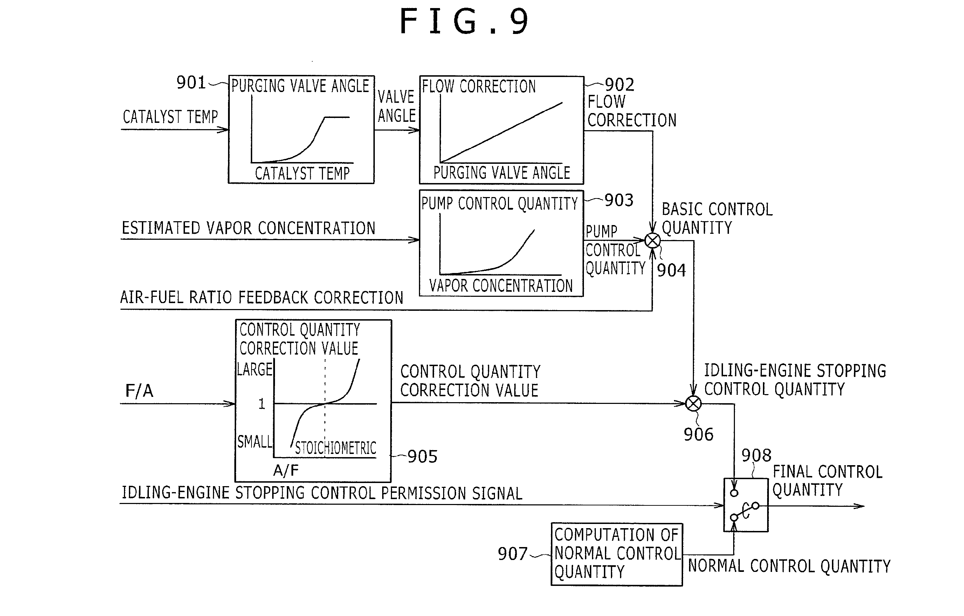

Fig. 9 is an example of a detailed diagram which represents effectiveness of the blocks 207 and 208 of the present invention, shown in Fig. 2.

Block 901 calculates a valve angle of the purging device by table search using the catalyst temperature sensor detection value or the estimated catalyst temperature. Block 902 calculates a to-be-controlled flow correction quantity from the valve angle by table search. Block 903 calculates a pump control quantity from the estimated fuel vapor concentration value by table search. Multiplier 904 calculates a basic control quantity by multiplying the pump control quantity by the flow correction quantity and an air-fuel ratio feedback control value. The air-fuel ratio feedback control value is a coefficient that can be calculated from an air-fuel ratio feedback coefficient and a deviation from a fuel vapor concentration correction quantity, but a detailed method of this calculation is omitted herein. Block 905 calculates an appropriate control quantity correction coefficient according to the measured air-fuel ratio, by table search. This calculation table is set so that when the fuel in the air-fuel mixture is lean, the control quantity is corrected toward a decrease from the basic control quantity, and so that when the fuel is rich, the control quantity is corrected toward an increase from the basic control quantity. Multiplier 906 calculates an idling-engine stopping control quantity by multiplying the basic control quantity that block 904 has calculated, by the control correction quantity that block 905 has calculated. Multiplier 907 calculates a normal control quantity. While the normal control quantity presupposes using a value that does not involve execution of control, value that does involve the execution of control may instead be used when necessary. Block 908 outputs either the idling-engine stopping control quantity or the normal control quantity, depending on the permission state of idling-engine stopping control.

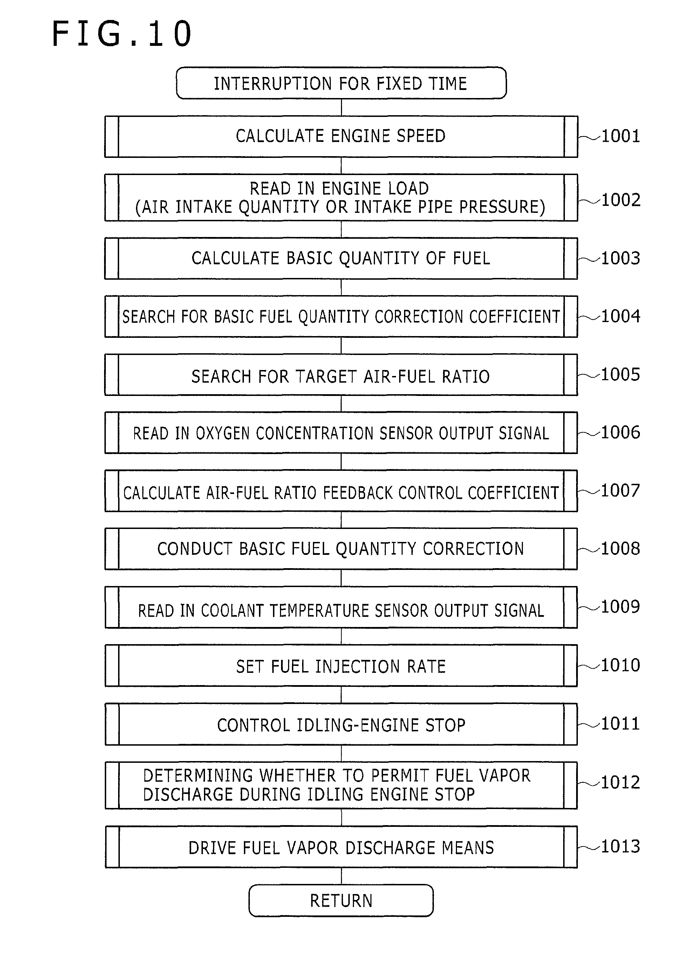

Fig. 10 is an example of a detailed flowchart showing a fuel calculation step and related steps included in the control block diagram of Fig. 1 relating to the present invention.

In step 1001, the engine speed is calculated. In step 1002, the engine load is read in. In the present example, the engine load refers to a quotient obtained by dividing an air intake pipe negative pressure or the amount of air intake, by the engine speed. In step 1003, a basic quantity of fuel is calculated. In step 1004, a correction coefficient for the basic quantity of fuel is searched for using the engine speed and the engine load. In step 1005, a search for a target air-fuel ratio called for takes place. In step 1006, an output signal from the oxygen concentration sensor is read in, and in step 1007, air-fuel ratio feedback based on the oxygen concentration sensor output signal occurs so that an air-fuel ratio in exhaust becomes equal to the target air-fuel ratio. Thus an air-fuel ratio feedback coefficient is calculated. In step 1008, the basic quantity of fuel is corrected using the air-fuel ratio feedback coefficient. In step 1009, an output signal from the coolant temperature sensor is read in, and in step 1010, the corrected basic quantity of fuel is set in/for fuel injection means. In step 1011, whether idling-engine stopping control is to be permitted or prohibited is determined according to a particular running state of the engine, and if the control is determined to be permitted, the idling-engine stopping control is executed. In step 1012, whether the driving of the fuel vapor discharge means is to be permitted is determined, and in step 1013, the fuel vapor discharge means relating to idling-engine stop is driven.

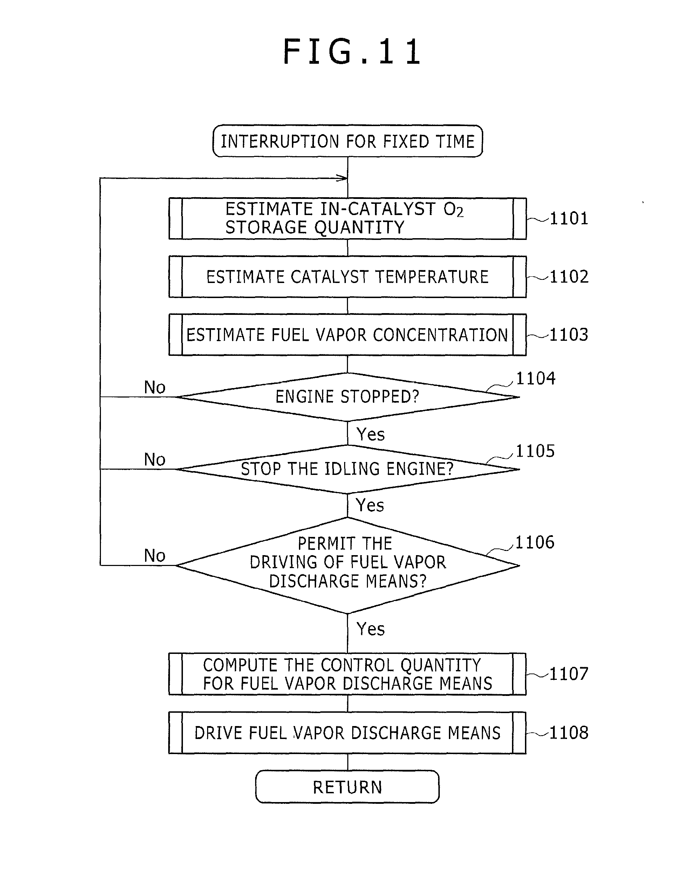

Fig. 11 is an example of a detailed flowchart relating to the control block diagram of Fig. 2 in the present invention.

In step 1101, the amount of oxygen occluded in the catalyst is estimated from a fuel injection rate as well as the amount of air taken in during internal combustion engine operation. In step 1102, the catalyst temperature is estimated from the fuel injection rate as well as the amount of air taken in during internal combustion engine operation. Alternatively the estimated catalyst temperature value may be a result of a measurement conducted using a temperature sensor placed in/on the catalyst. In step 1103, the fuel vapor concentration in the purging device is estimated from the amount of air taken in during internal combustion engine operation, the fuel injection rate, and the oxygen concentration sensor-measured value. In step 1104, whether the engine is stopped is determined and if the engine is determined to have been stopped, process control is transferred to step 1105. If the engine is determined to be running, process control is transferred to step 1101. In step 1105, it is determined whether the engine is stopped after idling, and if the engine is determined to have been stopped after idling, process control is transferred to step 1106. If the engine is determined not to have been stopped after idling, process control is returned to step 1101. In step 1106, whether the driving of the fuel vapor discharge means is to be permitted is determined from the amount of occluded oxygen that has been calculated in step 1101, the catalyst temperature that has been calculated in step 1102, and the idling-engine stop determination result in step 1106. If driving is determined to be permitted, process control is transferred to step 1107. If driving is determined to be prohibited, process control is returned to step 1101. In step 1107, a control quantity of the fuel vapor discharge means is calculated according to the value that the oxygen concentration sensor has measured, as well as the fuel vapor concentration that has been calculated in step 1103. In step 1108, the fuel vapor discharge means is driven according to the control quantity that has been calculated in step 1107.

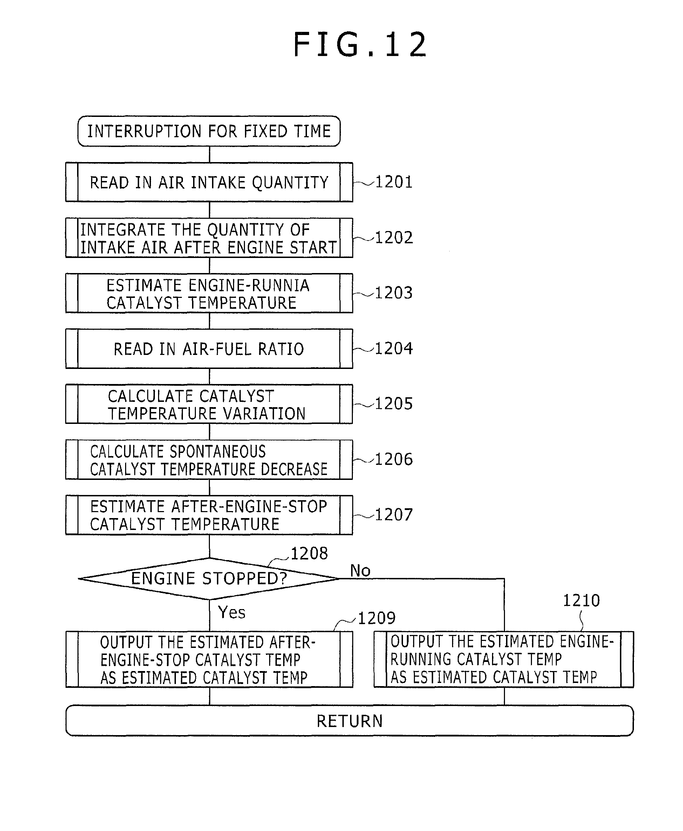

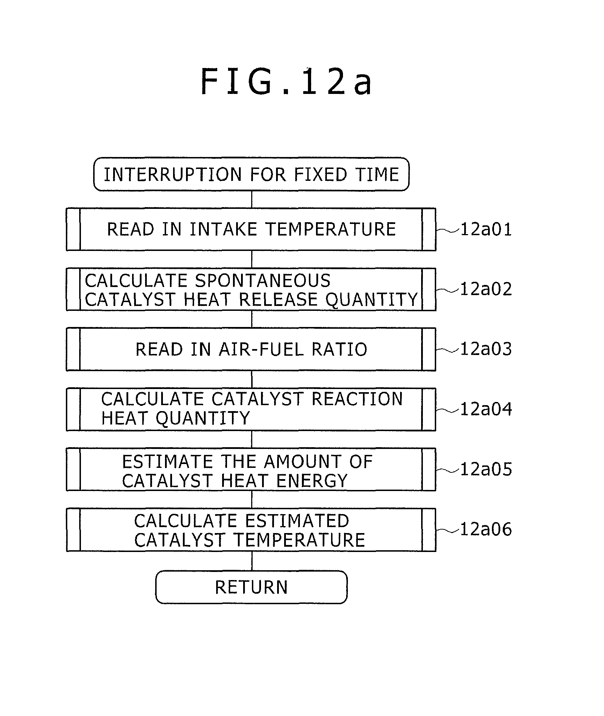

Fig. 12 is an example of a detailed flowchart of Fig. 8 in the present invention.

In step 1201, the amount of air intake is read in. In step 1202, a cumulative amount of air taken in from the start of the engine is calculated from the amount of air intake that has been read in. In step 1203, the engine-running catalyst temperature is estimated from the calculated cumulative amount of air intake. In step 1204, the value measured by the oxygen concentration sensor is read in and the air-fuel ratio is calculated. In step 1205, a variation in catalyst temperature is calculated from the air-fuel ratio. In step 1206, the engine-off catalyst temperature is estimated using a calculation expression described in block 804. In step 1207, a decrease in the temperature of the catalyst due to the natural release of heat is calculated. In step 1208, whether the engine is stopped is determined. If the engine is determined to be in a stopped state, the estimated engine-off catalyst temperature is output in step 1209 as a final estimated catalyst temperature. If the engine is determined not to be in a stopped state, the estimated engine-on catalyst temperature is output in step 1210 as the final estimated catalyst temperature.

Fig. 12a is another example of a detailed flowchart of Fig. 8a in the present invention.

In step 12a01, the intake air temperature is read in. In step 12a02, the quantity of heat spontaneously released from the catalyst is calculated from the intake air temperature. In step 12a03, the value measured by the oxygen concentration sensor is read in and the air-fuel ratio is calculated. In step 12a04, the quantity of heat of reaction that is generated in the catalyst is calculated from the calculated air-fuel ratio. In step 12a05, the estimated catalyst temperature is calculated using a calculation expression described in block 8a03. In step 12a06, the estimated catalyst temperature is calculated from the amount of catalyst heat energy.

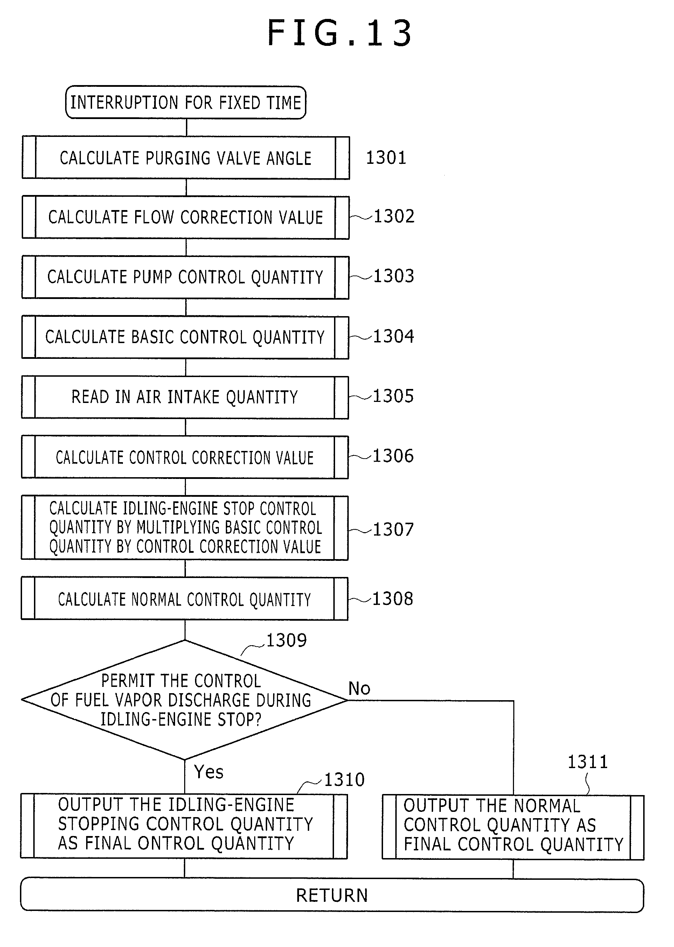

Fig. 13 is an example of a detailed flowchart of Fig. 9 in the present invention.

In step 1301, an angle of the purging valve is calculated from the catalyst temperature detected by the catalyst temperature sensor, or from the estimated catalyst temperature. In step 1302, a flow correction value is calculated from the purging valve angle. In step 1303, the control quantity of the pump is calculated from the estimated fuel vapor concentration. In step 1304, the basic control quantity of the fuel vapor discharge means is calculated from the pump control quantity, the flow correction value, and the air-fuel ratio feedback correction value. In step 1305, the value measured by the oxygen concentration sensor is read in and the air-fuel ratio is calculated. In step 1306, a control correction quantity is calculated from the air-fuel ratio by searching for a control correction quantity table. In step 1307, an idling-engine stopping control quantity is calculated by multiplying the basic control quantity that has been calculated in step 1304, by the control correction quantity that has been calculated in step 1306. In step 1308, the normal control quantity is calculated. In step 1309, whether the control of the fuel vapor discharge means is to be permitted is determined. If the control is determined to be permitted, the idling-engine stopping control quantity that has been calculated in step 1307 is output in step 1310 as a final fuel vapor discharge control quantity. If the control is determined to be prohibited, the normal control quantity that has been calculated in step 1308 is output in step 1311 as the final fuel vapor discharge control quantity.

While the embodiment of the present invention has been described in detail as above, the invention is not limited to the embodiment. In addition, no elements are limited to those of the above configuration so long as they do not degrade the function that characterizes the invention.

## Claims

1. A control unit for a vehicle equipped with a purging device to adsorb, into an adsorption tank, fuel vapors that have occurred in a fuel tank, and discharge the fuel vapors according to engine conditions,
wherein the vehicle further includes fuel discharge means to forcibly discharge the fuel vapors to an upstream side of a catalyst provided in an exhaust pipe of the vehicle; and
wherein the control unit controls the fuel discharge means after an internal combustion engine is stopped but while the catalyst is active so that the fuel vapors may be discharged.

2. The control unit for an internal combustion engine according to claim 1, the engine being further including:
a checker as the fuel discharge means to check the purging device for leaks by use of a pump provided in advance;
a passageway extending from the checker and communicating with the upstream side of the catalyst provided in the exhaust pipe; and
a discharge mechanism using the pump provided in advance on the checker.

3. The control unit for an internal combustion engine according to claim 1, the engine being further including:
an electrically driven supercharger as the fuel discharge means; and
a passageway extending from the purging device and communicating with an upstream side of the supercharger; wherein the supercharger discharges the fuel.

4. The control unit for an internal combustion engine according to claim 1,
wherein, when the control unit conducts the discharge control, the unit estimates the quantity of oxygen occluded in the catalyst and determines whether to execute the fuel discharge control from the estimated quantity of occlusion.

5. The control unit for an internal combustion engine according to claim 1,
wherein, when the control unit conducts the discharge control, the unit measures with an oxygen concentration sensor the concentration of oxygen treated by the catalyst, or estimates the oxygen concentration from a fuel concentration derived from an air-fuel ratio feedback correction value during engine operation, and thereby controls a control quantity according to the oxygen concentration.

6. The control unit for an internal combustion engine according to claim 1,
wherein, when the control unit conducts the discharge control, the unit uses an estimated concentration of the fuel in the purging device as an initial value of the fuel concentration therein existing upon a restart of the internal combustion engine.
